(19)

Europäisches
Patentamt
European
Patent Office
Office européen
des brevets

(11) **EP 2 606 972 A1**

(12) **EUROPEAN PATENT APPLICATION**

(43) Date of publication:
26.06.2013 Bulletin 2013/26

(21) Application number: 11195466.5

(22) Date of filing: 23.12.2011

(51) Int Cl.:
*B01J 37/03* (2006.01)   *B01J 27/051* (2006.01)
*C10G 45/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Shell Internationale Research
Maatschappij B.V.
2596 HR The Hague (NL)**

(72) Inventors:
• **Rigutto, Marcello Stefano
1031 HW Amsterdam (NL)**
• **Weber, Thomas
1031 HW Amsterdam (NL)**

(74) Representative: **Matthezing, Robert Maarten et al
Shell International B.V.
Intellectual Property Services
P.O. Box 384
NL-2501 CJ Den Haag (NL)**

(54) **Titania supported hydrodesulphurisation catalysts**

(57)    Processes for the manufacture of a catalyst composition are provided comprising undertaking a reductive co-precipitation reaction between a titanium containing compound and molybdenum containing compound, wherein the titanium compound comprises titanium in a low oxidation state and the molybdenum containing compound comprises molybdenum in a high oxidation state. Catalyst composition produced by the process are particularly suited to use in hydrocarbon hydrodesulphurisation (HDS) treatment.

**EP 2 606 972 A1**

## Description

The present invention relates to processes for the production of titania-supported hydrodesulphurisation (HDS) catalysts and catalysts made by these processes.

Hydrocarbon fuels often contain various quantities of organic sulphur compounds, which may contribute to the formation of acid rain when oxidized to SOx. Furthermore, this SOx can deactivate exhaust catalyst in cars. Typical crude oils comprise sulphur levels substantially in excess of 1000 ppm by weight. Therefore, crude oil and other heavy petroleum fractions are subjected to hydrodesulphurization (HDS) and hydrodenitrification in a hydrotreater reactor to significantly reduce contamination from sulphur and nitrogen compounds prior to being subjected to further processing.

The hydrodesulphurisation (HDS) reaction preferably is carried out in the presence of a catalyst. Platinum catalysts for HDS have been used historically, but these are expensive and have a short lifetime because platinum is very easily poisoned by sulphur.

The state of the art catalysts are currently sulphides, more specifically cobalt-molybdenum (CoMo) and nickel-molybdenum (NiMo) sulphides. These are usually formed from their oxidic precursors.

Hydrodesulphurisation catalysts are typically prepared by either precipitation or impregnation of the metals onto a carrier, such as $\gamma$-Al$_2$O$_3$, followed by drying, calcination and sulphidation to obtain the catalytically active CoMoS or NiMoS phases. Sulphidation is a crucial step in the preparation of active HDS catalysts and is normally done during the start-up phase of a process by exposing the catalyst to a sulphur-containing activator such as the hydrocarbon feed itself or by adding H$_2$S releasers to a recirculating hydrogen stream. It is known that the sulphidation procedure affects the catalytic activity and stability of the catalyst significantly. It is currently understood that the resulting catalyst is almost completely sulphided, by way of example, MoO$_3$ is entirely transformed into MoS$_2$ with co-promoter cobalt or nickel atoms dispersed along the edges of the MoS2 crystallites. Both the highly diverse nature of the active sulphide species and the variety of species present in supported promoted MoS$_2$-type catalysts, are complicating factors. In these catalysts there are indications for at least two types of (Co/Ni)MoS$_2$ phases called Type I and Type II structures. In Type I phases, MoS$_2$ is present as highly dispersed monolayer structures and is not fully sulphided, because some Mo-O-Al linkages are still present. The activity of Type I structure catalysts in deep HDS is therefore moderate. A more active Type II phase is essentially fully sulphided so that there are no chemical interactions with the support material. This Type II phase configuration conforms with a higher degree of stacking, sometimes referred to as slab structures. Hence, the Type II phase configuration is preferred in MoS$_2$ containing catalysts.

In recent years, it has been determined that MoS$_2$ supported on TiO$_2$ (titania) has an even higher activity than if supported on $\gamma$-Al$_2$O$_3$. For this reason it is desirable to develop a simple and effective methodology to synthesize highly active titania-supported HDS catalysts.

The inventors have developed a procedure to prepare MoS$_2$/TiO$_2$ bulk-metal sulphides, optionally additionally containing promoter(s), by means of reductive co-precipitation approach. This approach allows for the generation of active catalytic particles (MoS$_2$ and Co/Ni-MoS$_2$) as well as the support (TiO$_2$) simultaneously in a single precipitation step.

The present process differs from the synthesis of bulk metal oxides (BMO) set out in Xie et al. (J. Am. Chem. Soc. (2009) 131, 6648-6649) in that the present invention uses molybdenum instead of noble metals and applies different reaction conditions leading to different products.

In a first aspect the invention provides a process for the manufacture of a catalyst composition comprising undertaking a reductive co-precipitation reaction between a titanium containing compound and a molybdenum and/or tungsten containing compound, wherein the titanium compound comprises titanium in a low oxidation state and the molybdenum and/or tungsten containing compound comprises molybdenum and/or tungsten in a high oxidation state. The molybdenum and/or tungsten containing compound preferably is molybdenum.

In an embodiment of the invention, the titanium is in an oxidation state of three (e.g. Ti[III]). In a further embodiment of the invention the molybdenum is in an oxidation state of six (e.g. Mo[VI]). In a specific embodiment of the invention, the titanium containing compound comprises titanium (III) chloride. In a specific embodiment of the invention, the molybdenum containing compound is selected from ammonium tetrathiomolybdate, sodium tetrathiomolybdate and potassium tetrathiomolybdate. In one example of the invention in use, described in more detail below, ammonium tetrathiomolybdate is preferred.

According to one embodiment of the invention the reaction occurs under aqueous conditions. In an alternative embodiment of the invention the reaction is carried out under partially aqueous conditions. By partially aqueous it is meant that other solvents in addition to water may be present. Typically under partially aqueous conditions at least around 20 wt% of the total solvent present comprises water, or at least sufficient water is present to ensure solubility all of the reactants is achieved. Optionally around 50 wt% of the total solvent present comprises water. In a further embodiment of the invention the solvent is entirely non-aqueous. Suitable organic solvents for use in the process of the invention are selected from those having a high dipole moment and may include: N,N-dimethylformamide (DMF), butanol (BuOH), tetrahydrofuran (THF), acetonitrile (CH$_3$CN), and acetone or mixtures thereof.

A specific embodiment of the invention provides for the inclusion of one or more additives to the process of the invention. The additives may comprise a metal salt or chelating agent. Suitable chelating agents may include on or more of the group consisting of: ethylenediaminetetraacetic acid (EDTA); nitrilotriacetic acid (NTA); and diethylenetriaminepentaacetic acid (DTPA). Suitable metal salts include sodium chloride.

The process of the reaction, in an embodiment of the invention, may be carried out within a temperature range no lower than ambient temperature - i.e. room temperature. Typically the temperature is elevated to a level of at least around 70°C and at most around 180°C. Suitably the temperature is at least around 80°C, more suitably at least around 90°C and optionally at least around 100°C. In one embodiment of the invention the temperature is no less than 100°C and no greater than 150°C.

In a specific embodiment of the invention the pH of the process is maintained in the basic range - i.e. at a pH greater than 7, more preferably a pH of at least 7.5, more speficially at least 8. Optionally, a basic pH is maintained by addition of ammonia in excess.

In a further embodiment of the invention one or more promoters is added. Suitably, the promoter may include a cobalt (Co) containing compound and/or a nickel (Ni) containing compound. Typically the promoter containing compound is a salt, suitably selected from a chloride, a nitride or an acetate. In one embodiment of the invention the Co containing compound is cobalt (II) chloride, suitably cobalt (II) chloride hexahydrate ($CoCl_2.6H_2O$). In a further embodiment of the invention the nickel containing compound is nickel (II) chloride, suitably nickel (II) chloride hexahydrate ($NiCl_2.6H_2O$).

A second aspect of the invention provides a catalyst composition comprising a titanium (Ti) content of at least 20 %wt and preferably at most 83 %wt, a molybdenum (Mo) content of at least 10 %wt and preferably at most 73 %wt, and a sulphur (S) content of at least 7 %wt and preferably at most 70 %wt. All these are the amounts of element per se. In a specific embodiment of the invention the particle comprises a titania support. In a further embodiment of the invention substantially all of the molybdenum and sulphur are present in the form of molybdenum disulphide ($MoS_2$), preferably at least 90 %wt, more specifically at least 95 %wt and most preferably at least 99 %wt of the molybdenum and sulphur are present in the form of molybdenum disulphide.

Optionally, the composition of the invention may further contain at least one co-promoter, wherein the co-promoter is selected from the group consisting of cobalt (Co) and nickel (Ni). In a further embodiment of the invention the catalyst composition is in the form of particles having a diameter size in the region of at least 0.01 $\mu$m and at most 100 $\mu$m, more specifically up to 1 $\mu$m in diameter. The diameter size is the weight average longest diameter. According to one embodiment of the invention the particle is up to 0.1 $\mu$m in diameter. Suitably the particles of the invention may be of a size range that falls between 10 and 50 nanometers (nm) in diameter, suitably between 20 and 50 nm in diameter.

In a specific embodiment of the invention the particle is obtained according to the methods described above and in particular via the simultaneous formation of titania carrier and metal sulphide. Hence, in an embodiment of the invention the particle does not require further exposure to hydrogen sulphide ($H_2S$) or to a sulphide containing hydrocarbon feed stream in order to achieve a fully sulphided metal content.

A third aspect of the invention provides for the use of a composition comprising the above described particles as an HDS catalyst. In a specific embodiment of the invention the composition is suitable for use in deep and/or ultra-deep HDS reactions, that is desulfurization of hydrocarbon feed streams to sulphur content of below 100 ppm or as much as below 10 ppm respectively.

A fourth aspect of the invention provides a process for HDS treatment of a hydrocarbon feed stream using a catalyst composition of the present invention. In a specific embodiment of the invention the process utilises catalyst that does not include an additional co-promoter. In a further embodiment of the invention the process utilises catalyst that does not include an additional co-promoter.

The invention provides a novel synthetic approach towards titania-supported Mo-based catalysts that are suitable for use in HDS reactions. The catalysts of the invention are advantageously generated in a single step with the active metal being already in the sulphided state. The inventors have described this approach as a "reductive co-precipitation", the principle of which consists in a redox reaction between molybdenum in a high and titanium in a low oxidation state. Without wishing to be bound to any theory, it is thought that the reaction of the present invention proceeds according to reaction (1) set out below:

$$(NH_4)2Mo^{VI}S_4 + 2\,Ti^{III}Cl_3 + xNH_3 + 5HCl + 2H_2O \rightarrow Mo^{IV}S_2 + Ti^{IV}O_2 + x(NH_4)Cl + 4\,HCl + TiS_2 \quad \textbf{(1)}$$

In this embodiment of the invention, the material used for the basic reaction-type is titanium trichloride ($TiCl_3$) and ammonium tetrathiomolybdate ($(NH_4)2MoS_4$). In order to fulfil the stoichiometric requirements of equation (1) the amount of $TiCl_3$ should be twice the amount of $(NH_4)2MoS_4$, which unavoidably leads to a high loading of metal particles in the final material (theoretical value: 33%wt Mo).

Without wishing to be bound by theory it is believed that in the course of the redox reaction, a titanium (III) oxide/hydroxide nanostructure initially forms due to hydrolysis of $TiCl_3$ in the acidic aqueous solution. Once molybdenum (VI) centres come in contact with the titanium (III) oxide/hydroxide intermediate an immediate redox process starts and $MoS_2$ crystallites nucleate rapidly on the surface accompanied by converting the intermediate titanium (III) oxide/hydroxide into $TiO_2$. Due to significant differences in chemical hardness, reactions of titanium (IV) with $S_2$- to stoichiometric quantities of $TiS_2$ can be excluded. However, the presence of a $TiS_2$-type overlayer on the $TiO_2$ structure cannot be entirely excluded, and for this reason $TiS_2$ is printed in italics in equation (1) above.

The invention is further described in the following nonlimiting examples.

Example - Preparation of unpromoted $MoS_2/TiO_2$ catalysts

$(NH_4)2MoS_4$ (1g, 3.8 mmol, leq.) was dissolved in water (40 ml) under the addition of 10ml ammonia (pH: 8.3). The solution was stirred at room temperature for one hour and then filtered. A dark-red solution was obtained and transferred into a roundbottom flask in inert atmosphere. The Ti(HEDTA) complex was prepared by dissolving ethylenediaminetetraacetic acid diammonium salt hydrate (2.48 g = 7.6 mmol) in water (30 mL), adding titanium trichloride (7.6mL = 7.6 mmol) in hydrochloric acid (2-3M) and afterwards dropwise ammonia (2.1mL = 30.4 mmol). The pH value of the resulting solution is 1.92.

The obtained Ti(HEDTA) solution was transferred via a septum to the dropping funnel and was added dropwise to the ammonium tetrathiomolybdate solution. The reaction mixture was stirred for 7 days at room temperature. A black suspension was formed, which was filtered off and dried in nitrogen atmosphere at room temperature.

This experiment was repeated at a reaction temperature of 100°C (reflux cooler) and decreasing the reaction time to 24 hours. Under these conditions we obtained a similar product.

**Claims**

1. A process for the manufacture of a catalyst composition comprising undertaking a reductive co-precipitation reaction between a titanium containing compound and a molybdenum and/or tungsten containing compound, wherein the titanium compound comprises titanium in a low oxidation state and the molybdenum and/or tungsten containing compound comprises molybdenum and/or tungsten in a high oxidation state.

2. The process of claim 1, wherein the titanium is in an oxidation state of three ($Ti^{III}$).

3. The process of claims 1 or 2, wherein the high oxidation state compound is a molybdenum containing compound.

4. The process of any previous claim, wherein the titanium containing compound is titanium (III) chloride.

5. The process of any previous claim, wherein, the molybdenum containing compound is ammonium tetrathiomolybdate.

6. The process of any previous claim, wherein the reaction occurs in the presence of an aqueous solvent.

7. The process of any previous claim, wherein the reaction occurs in the presence of one or more additives selected from the group consisting of: a chelating agent; a stabiliser; and a buffering agent.

8. The process of any previous claim, wherein the process is carried out at a temperature of at least 70°C and at most around 180°C.

9. The process of any previous claim, wherein the pH of the reaction mixture is maintained at least 7.5, more specifically at least 8.

10. The process of the invention, wherein the reaction mixture additionally comprises one or more co-promoters selected from the group consisting of a cobalt (Co) containing compound; a nickel (Ni) containing compound; and a combination of both Co and Ni containing compounds.

11. A catalyst composition having a titanium (Ti) content of at least 20 %wt, a molybdenum (Mo) content of at least 10 %wt, and a sulphur (S) content of at least 7 %wt, wherein the catalyst composition comprises the titanium in the form of titania ($TiO_2$) and the molybdenum and sulphur are present in the form of molybdenum disulphide ($MoS_2$).

**12.** The catalyst of claim 11, wherein the composition further comprises at least one co-promoter, wherein the co-promoter is selected from cobalt (Co) or nickel (Ni).

**13.** Use of a composition according to claim 11 or 12 as a hydrodesulphurization (HDS) catalyst.

**14.** A process for HDS treatment of a hydrocarbon feed stream comprising exposing the feed stream to a catalyst composition prepared according to the process of claims 1 to 10 under hydrodesulphurization reaction conditions.

Europäisches
Patentamt

European
Patent Office

Office européen
des brevets

**EUROPEAN SEARCH REPORT**

Application Number

EP 11 19 5466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 003 916 A (HITACHI LTD) 21 March 1979 (1979-03-21) * abstract * * page 2, lines 9-15 * * page 2, line 53 - page 3, line 45 * * examples 1,2 * | 1-14 | INV. B01J37/03 B01J27/051 C10G45/02 |
| X | EP 0 496 592 A1 (SUMITOMO METAL MINING CO [JP]) 29 July 1992 (1992-07-29) * abstract * * page 3, lines 31-38 * * examples 7,8 * | 1-14 | |
| X | US 7 981 275 B2 (TOLEDO ANTONIO JOSE ANTONIO [MX] ET AL) 19 July 2011 (2011-07-19) * abstract * * column 4, line 61 - column 5, line 14 * * example 1 * | 1-14 | |
| X | WO 2004/073854 A1 (SHELL INT RESEARCH [NL]; DOMOKOS LASZLO [NL]; JONGKIND HERMANUS [NL];) 2 September 2004 (2004-09-02) * abstract * * page 5, lines 13-20 * * page 6, lines 25-26 * * page 8, lines 14-23 * * page 12, lines 15-16 * * page 17, lines 9-12 * * page 22, lines 14-30 * * page 23, lines 26-29 * * examples 1,2,5,12,15 * | 1-14 | TECHNICAL FIELDS SEARCHED (IPC) B01J C10G |

-/--

The present search report has been drawn up for all claims

| Place of search | Date of completion of the search | Examiner |
|---|---|---|
| Munich | 2 May 2012 | Fischbach, Malaika |

EPO FORM 1503 03.82 (P04C01)

| | Europäisches Patentamt European Patent Office Office européen des brevets | **EUROPEAN SEARCH REPORT** | Application Number EP 11 19 5466 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MURALI DHAR G: "Mixed oxide supported hydrodesculfurization catalytss-a review", CATALYSIS TODAY, ELSEVIER, NL, vol. 86, 1 November 2003 (2003-11-01), pages 45-60, XP009158736, ISSN: 0920-5861, DOI: 10.1016/S0920-5861(03)00403-6 [retrieved on 2003-10-07] * the whole document * ----- | 11-14 | |
| X | HIROMICHI SHIMADA: "Morphology and orientation of MoS2 clusters on Al2O3 and TiO2 supports and their effect on catalytic performance", CATALYSIS TODAY, vol. 86, no. 1-4, 1 November 2003 (2003-11-01), pages 17-29, XP55025368, ISSN: 0920-5861, DOI: 10.1016/S0920-5861(03)00401-2 * the whole document * ----- | 11-14 | |
| | | | TECHNICAL FIELDS SEARCHED (IPC) |

The present search report has been drawn up for all claims

| Place of search | Date of completion of the search | Examiner |
|---|---|---|
| Munich | 2 May 2012 | Fischbach, Malaika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 606 972 A1

**ANNEX TO THE EUROPEAN SEARCH REPORT
ON EUROPEAN PATENT APPLICATION NO.**                    EP 11 19 5466

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2012

| Patent document cited in search report | | Publication date | Patent family member(s) | | Publication date |
|---|---|---|---|---|---|
| GB 2003916 | A | 21-03-1979 | DE | 2838231 A1 | 08-03-1979 |
| | | | FR | 2401979 A1 | 30-03-1979 |
| | | | GB | 2003916 A | 21-03-1979 |
| | | | US | 4206036 A | 03-06-1980 |
| EP 0496592 | A1 | 29-07-1992 | CA | 2059760 A1 | 23-07-1992 |
| | | | DE | 69200261 D1 | 01-09-1994 |
| | | | DE | 69200261 T2 | 03-11-1994 |
| | | | EP | 0496592 A1 | 29-07-1992 |
| | | | JP | 4243547 A | 31-08-1992 |
| | | | US | 5162281 A | 10-11-1992 |
| US 7981275 | B2 | 19-07-2011 | AU | 2003267854 A1 | 27-04-2005 |
| | | | US | 2010038285 A1 | 18-02-2010 |
| | | | WO | 2005035117 A1 | 21-04-2005 |
| WO 2004073854 | A1 | 02-09-2004 | AR | 043243 A1 | 20-07-2005 |
| | | | BR | PI0407755 A | 14-02-2006 |
| | | | CA | 2516691 A1 | 02-09-2004 |
| | | | JP | 2006519097 A | 24-08-2006 |
| | | | KR | 20050100007 A | 17-10-2005 |
| | | | US | 2004235653 A1 | 25-11-2004 |
| | | | US | 2009239743 A1 | 24-09-2009 |
| | | | WO | 2004073854 A1 | 02-09-2004 |

EPO FORM P0459

For more details about this annex : see Official Journal of the European Patent Office, No. 12/82

8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIE et al.** *J. Am. Chem. Soc.,* 2009, vol. 131, 6648-6649